Europäisches Patentamt

(19) European Patent Office

Office européen des brevets

(11) Publication number: **0 287 176**
**B1**

(12) **EUROPEAN PATENT SPECIFICATION**

(45) Date of publication of patent specification: **16.01.91**

(51) Int. Cl.⁵: **A 01 K 13/00**

(21) Application number: **88200700.8**

(22) Date of filing: **12.04.88**

(54) Device for brushing the back of animals.

(30) Priority: **16.04.87 NL 8700926**
**04.08.87 NL 8701843**

(43) Date of publication of application:
**19.10.88 Bulletin 88/42**

(45) Publication of the grant of the patent:
**16.01.91 Bulletin 91/03**

(84) Designated Contracting States:
**AT BE CH DE ES FR GB GR IT LI LU NL SE**

(56) References cited:
**FR-A-2 560 002**
**US-A-2 964 011**
**US-A-3 175 537**

(73) Proprietor: **Liets Agrarische Technieken B.V.**
**Wilgenkamp 74**
**NL-7581 HD Losser (NL)**

(72) Inventor: **Liet, Fredericus**
**Wilgenkamp 74**
**NL-7581 HD Losser (NL)**

(74) Representative: **Schumann, Bernard Herman Johan et al**
**OCTROOIBUREAU ARNOLD & SIEDSMA**
**Sweelinckplein 1**
**NL-2517 GK The Hague (NL)**

Courier Press, Leamington Spa, England.

# Description

The invention relates to a device for brushing the backs of animals, said device comprising:

a frame for disposing in a fixed position, to which frame a brush unit is connected for up and down movement, said frame including a substantially vertical frame tube, a single carrier arm carrying said brush unit, said arm being guided by said frame such as to enable said up and down movement, and

spring means which, in combination with the weight force of said carrier arm together with said brush unit urge the carrier arm to a rest position relative to said frame.

Such a device is known from US-A-3 175 537.

The brushing device according to this prior art specification is provided with externally accessible springs.

The invention has for its purpose to design a brushing device for animals in a manner such that there is no risk of injuring of the animals as a result of the accessibility of the spring means.

In view thereof the invention proposes a device of the type specified in the first portion of claim 1, which is characterized in that the spring means are accommodated inside said frame tube.

According to a first embodiment of the invention the brush unit comprises a brush roll rotatable round a lying rod connected to the carrier arm. A rotary brush hereby has the advantage that as a result of the rotational movement during brushing the brush bristles are not flattened, and in addition dirtying of the brush unit is reduced, this dirtying being greatest when the brush bristles are pressed flat.

If in preference the device comprises a friction coupling acting on the brush roll, the rotational movement of the brush can be set such as to avoid on the one hand the occurrence of an insufficient brushing effect in the case of too easy rotation of the brush, and on the other the occurrence of the above stated drawbacks as a result of non-rotation of the brush during brushing.

It is desirable for optimal rotation of the brush roll that it extends substantially transversely of the direction of movement of the back being brushed. An optimum positioning of the brush roll is obtained if in preference the rod is fastened to a spring attached to the carrier arm. If the spring consists of a spiral spring it is advantageous to accommodate the spiral spring in a protective sleeve so as to avoid any contact between the animals and the spiral spring whereby pinching is substantially precluded.

For brushing of a lower lying portion of the back and the flanks it is advantageous that the brushing device also comprises a brush roll rotatable round an upright shaft attached to the frame. It is advantageous that this upright brush roll is free rotating. During brushing on the lying brush roll the animal performs a movement back and forth and the protruding flank portions of the animal will touch the upright brush and set it into rotation, as a result of which flattening and dirtying of the brush bristles is avoided. The result of all this is a longer life of the vertical brush. Should the animal wish to brush its flanks it will then perform a more vertical movement along the upright disposed brush roll and this movement will result in no or virtually no rotation of the brush roll while producing a sufficient brushing effect.

In accordance with a second embodiment of the invention the brush unit is substantially bracket-shaped and comprises locking means which secure the carrier arm against a rotation relative to the fixed position. In this way is avoided that the brush unit begins to twist during brushing, which torsion movement has a negative effect on the brushing action.

The locking means preferably comprise a carrier arm support connected to the carrier arm, which support is mounted for up and downward reciprocation in an upright frame tube with a non-round, for instance square, bearing means. The frame can thus be arranged on the shed floor or be attached to a post, railing or shed wall. In accordance with a favourable embodiment an annular bearing cover is placed on the free end of the frame tube, in which cover a ring of bearing elements is accommodated serving as bearing for the carrier arm support inserted through the bearing cover.

In another embodiment whereby the carrier arm support protrudes laterally out of the upright frame tube, it is desirable that a protective cover guards a channel open towards the top and defined by the bracket-shaped brush unit and the frame tube. This prevents an animal becoming stuck in this channel and, in the case it jumps up against the device, striking against upright construction parts and being diverted away from the device.

If in preference the free end of the bracket-like brush unit is provided with a protective sole, this prevents the free end causing injury to the animal in the case it should jump up.

In order to maximize the effectiveness of the device the embodiment may be recommended which has the special feature that the brushing device possesses at least partially a curvature adapted to the shape of the back of an animal to be brushed. To this end a variant can for example be used in which the brush roll displays a mildly double-conical form. In another embodiment the brush roll comprises in lengthwise direction at least two segments placed at an angle to each other. Great flexibility is achieved with a variant whereby the angle can be adjusted.

Mentioned and other characteristics of the invention will be described hereinafter on the basis of various embodiments of the brushing device according to the invention, whereby reference is made to the annexed drawing, in which:

Fig. 1 is a perspective view of a brushing device according to the invention which is guided for reciprocating movement in an upright, open frame tube;

Fig. 2 is a perspective view of a device according to the invention with a bracket-shaped brush unit which is guided for reciprocating movement on a frame attached to a wall;

Fig. 3 shows an embodiment of the device according to the invention whereby the brush unit is formed by two rotary brush rolls;

Fig. 4 is a partly broken away perspective view similar to fig. 3 of a further embodiment;

Fig. 5 is a perspective view of a variant whereby the more or less horizontally extending brush roll takes a segmented form; and

Fig. 6 is a view corresponding with fig. 5 of a variant in which the relative angle position of the brush roll segments is adjustable.

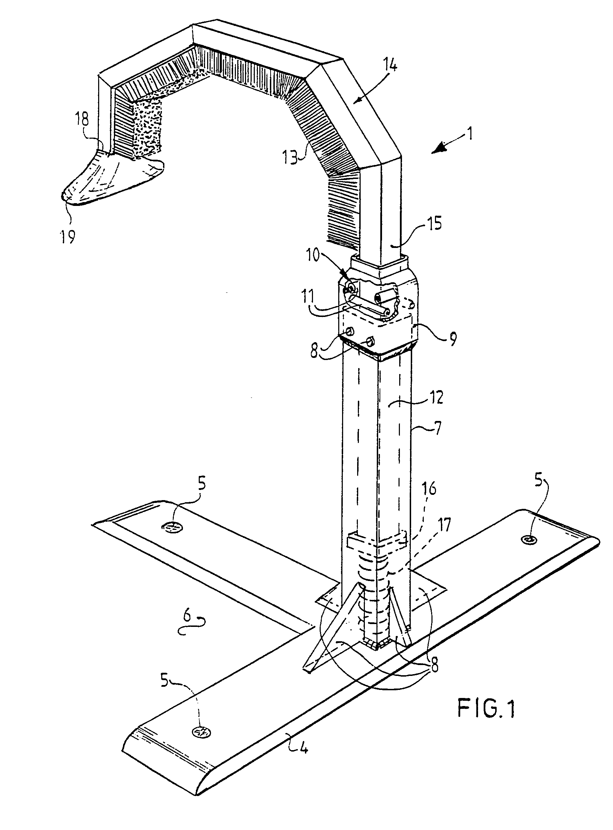

Fig. 1 shows a brushing device 1 according to the invention. Brushing device 1 comprises a T-shaped frame foot 4 which is arranged on a fixed position 6 with bolts 5. Welded onto frame foot 4 is a frame tube 7 of square section. Frame tube 7 is provided on its lower end with shores 8 welded thereto and to frame foot 4. Placed on the top end of frame tube 7 is an annular bearing cover 9 attached thereto with screws 8. Accommodated in bearing cover 9 is a ring 10 of roller bearings 11 attached in bearing cover 9 for free rotation.

The bracket-like brush unit 14 provided with a brush member 13 comprises a carrier arm 15 which passes into the carrier arm support 12 which is bearing mounted with a non-round, in this case square, bearing means 16 in frame tube 7 and in the rest position rests on a compression spring 17.

Through the use of roller bearings 11 and the bearing means 16 the carrier arm 15 is substantially locked against a rotation relative to the fixed position 6.

The free end 18 of the bracket-shaped brush unit 14 is furnished with a protective sole 19 that widens towards the bottom.

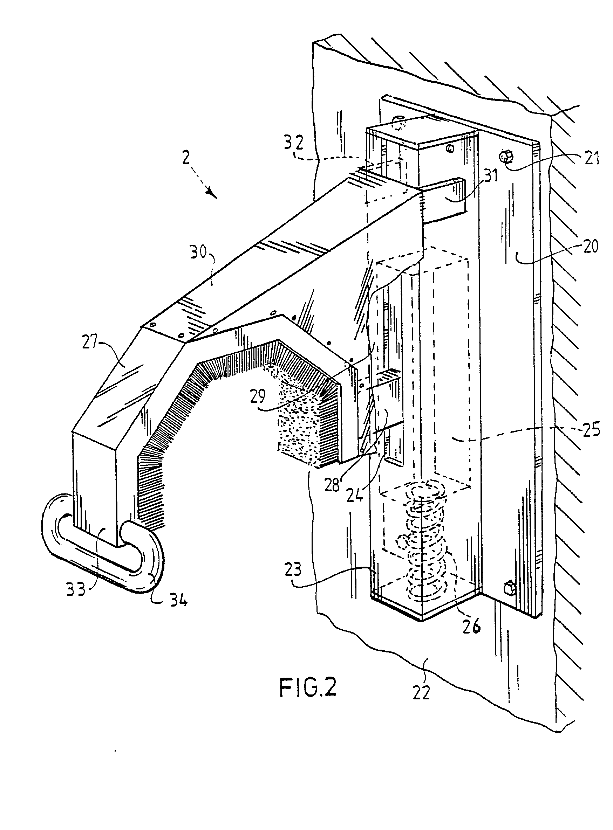

In the brushing device 2 as in fig. 2 a frame plate 20 is attached firmly with bolts 21 to a wall 22. Welded in position onto frame plate 20 is a frame tube 23 provided with a vertical slot 24. In frame tube 23 is guided a rectangular bearing block 25 which rests in its rest position against a compression spring 26. The brush unit 27 which in this case is also angular and bracket-shaped is attached to bearing block 25 with the carrier arm 28 that is placed through the slot 24. In this way the brush unit 27 is guided for reciprocating movement in the frame tube 23. The rectangular bearing block secures brush unit 27 against a rotation relative to the fixed position, which in this case is the wall 22.

A channel 29 opening towards the top which is defined by a portion of the bracket-shaped brush unit 27, the carrier arm or carrier arm support 28 protruding laterally out of frame tube 23 and the vertical frame tube 23 itself, is protected by a protective cover 30 which is fastened to the brush unit 27 and is guided along frame tube 23 with lobes 31, 32.

The free end 33 of brush unit 27 is provided with a protective sole in the form of a bracket 34.

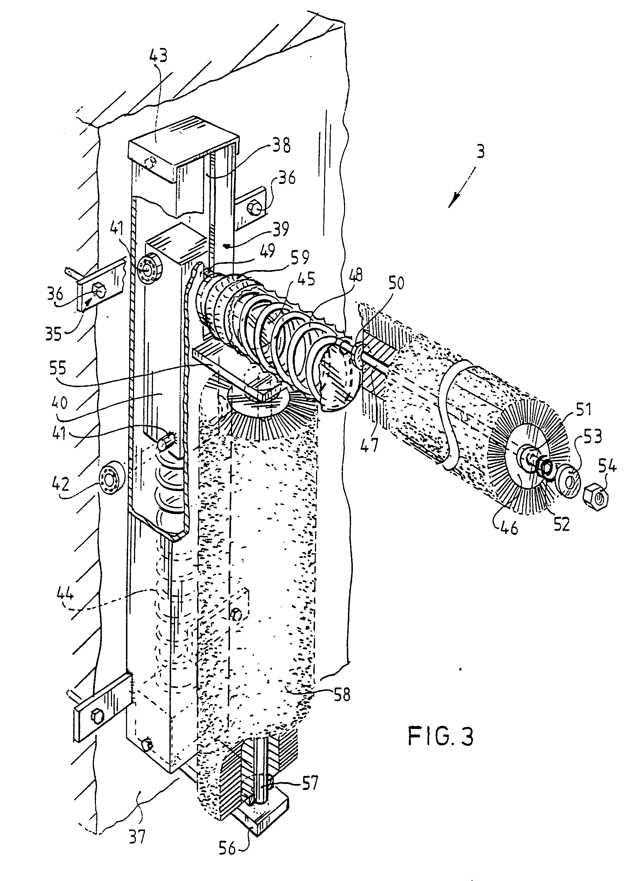

With the brushing device 3 according to the invention as shown in fig. 3 a frame 35 is firmly attached with bolts 36 to a concrete post 37 arranged in a shed. The frame comprises a tube 39 of square section provided with a vertical slot 38, in which tube is mounted a bearing block 40 with bearing mounted wheels 42 placed for free rotation on shaft end parts 41. This bearing unit can be inserted into frame tube 39 by first removing a cover cap 43 of frame tube 39. In its rest position the bearing block 40 rests on a compression spring 44.

The brushing device 3 comprises as brush unit a lying, rotating brush roll 46 which is mounted for rotation round a rod 47 which forms a free spring member of a spiral spring 48 which is placed and welded in position on a stump-shaped carrier arm 45. Carrier arm 45 is firmly attached via a connecting piece 49 placed through the slot 38 to the bearing block 40. The lying brush roll 46 is in this way guided for up and downward movement on frame 35.

Brush roll 46 is enclosed between an annular washer 50 rigidly attached to rod 47 and a washer 51 placed on rod 47. Washer 51 is under spring bias of a spring 52 in the direction of washer 50, the spring 52 supporting on a washer 53 lying against a nut 54 screwed onto rod 47. With the above described friction coupling 50—54 the initial force can be adjusted for setting brush roll 46 into rotation.

Placed on frame tube 39 beneath the reciprocating, lying and rotatable brush roll 46 is an upright rotating brush roll 58 which can turn freely on a shaft 57 accommodated between frame noses 55, 56.

In order to avoid portions of the animal being caught in the spiral spring 48 a concertina-like protective sleeve 59 is fitted round spiral spring 48.

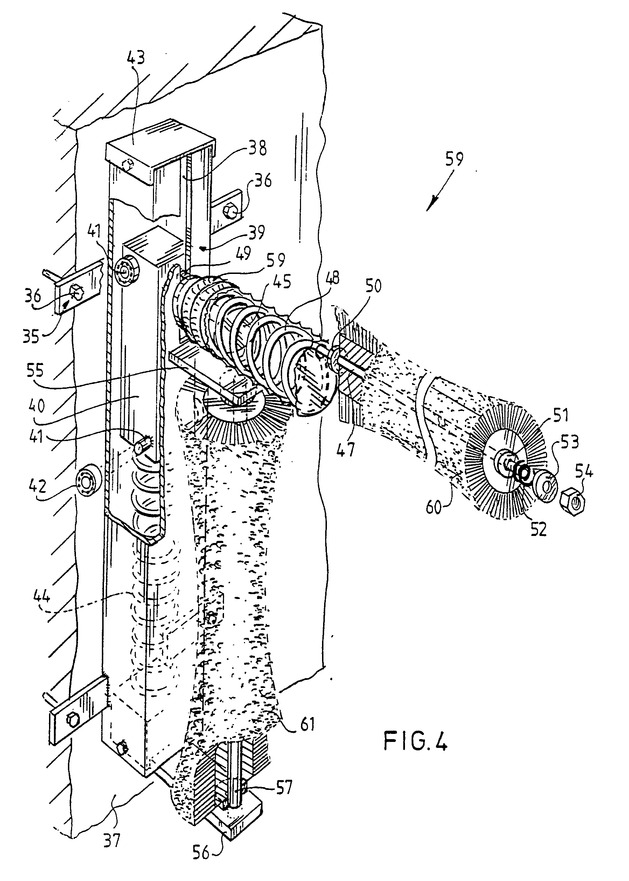

Fig. 4 shows a brushing device 59 which corresponds partially with the device 3 as in fig. 3. The various corresponding components are therefore designated with the same reference numerals as therein; they will not be further named or discussed. The essential difference between device 3 and device 59 is the form of the brush rolls. Device 59 comprises a vertical brush roll 61 and a horizontal brush roll 60 corresponding with the respective brush rolls 58 and 46 as in fig. 3, which brush rolls 60 and 61 have a mildly double-conical form. This provides a certain adaptation to the back of an animal to be brushed.

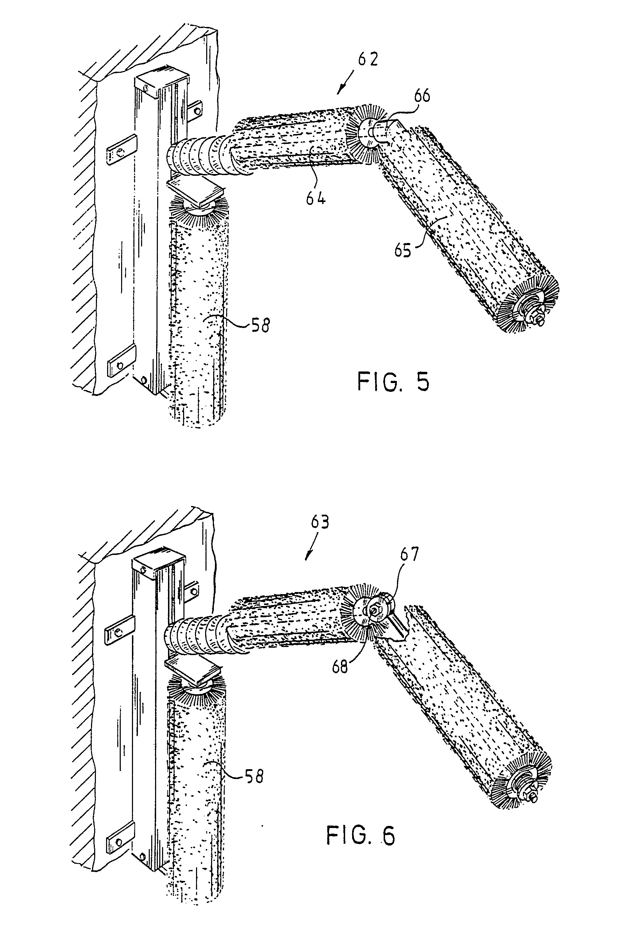

The figures 5 and 6 show respectively a device 62 and a device 63 which are designed with this same object in mind. In the case of fig. 5 the more or less horizontally extending brush roll is built up of two brush roll segments 64, 65 positioned at an angle to each other. These segments are coupled to each other at a fixed angle by an angle socket 66.

The device 63 according to fig. 6 differs from the device 62 in the sense that the angle socket is replaced by two flange elements 67 that are adjustable relative to each other and which can be fixed in position by means of a screw connection 68.

It will be apparent that in the embodiments as according to figures 5 and 6 the vertical brush roll 58 could if required also display a curvature as in fig. 4, or also be constructed segmentally. Conversely, the vertical brush 61 in the embodiment as in fig. 4 could display a cylindrical form similar to the brush 58 as in fig. 3.

The number of segments in the embodiments as according to figures 5 and 6 may be other than two.

## Claims

1. Device (1) for brushing the backs of animals, said device comprising:

a frame (4, 7) for disposing in a fixed position (6), to which frame (4, 7) a brush unit (14) is connected for up and down movement, said frame (4, 7) including a substantially vertical frame tube (7), a single carrier arm (15) carrying said brush unit (14), said arm (15) being guided by said frame (4, 7) such as to enable said up and down movement, and

spring means (17) which, in combination with the weight force of said carrier arm (15) together with said brush unit (14) urge the carrier arm (15) to a rest position relative to said frame (4, 7),

characterized in that the spring means (17) are accommodated inside said frame tube (7).

2. Device as claimed in claim 1, characterized in that the brush unit comprises a brush roll (46) rotatable round a lying rod (47) connected to the carrier arm (45).

3. Device as claimed in claim 1 or 2, characterized in that a brush roll (58), rotatable round an upright shaft (57), is attached to the frame (55, 56).

4. Device as claimed in claims 2—3, characterized by a friction coupling (50—54) acting on the brush roll (46).

5. Device as claimed in claims 2—4, characterized in that the rod (47) is fastened to a second spring (48) attached to the carrier arm.

6. Device as claimed in claim 5, characterized in that the spring (48) is a spiral spring accommodated in a protective sleeve (59).

7. Device as claimed in claim 1, characterized in that the brush unit (14) is substantially bracket-shaped and the device (1) comprises locking means (10—11) which secure the carrier arm (15) against a rotation relative to the fixed position (6).

8. Device as claimed in claim 7, characterized in that the locking means (10, 11) comprise a carrier arm (15) support (12) connected to the carrier arm (15), which support (12) is mounted for up and downward reciprocation in an upright frame tube (7) with a non-round, for instance square, bearing means (10, 11).

9. Device as claimed in claim 8, characterized in that an annular bearing cover (9) is placed on the free end of the frame tube (7), in which cover (9) is placed on the free end of the frame tube (7), in which cover (9) a ring (10) of bearing elements (11) is accommodated serving as bearing for the carrier arm (15) support (12) inserted through said bearing cover (9).

10. Device as claimed in claim 7 or 8, characterized in that the carrier arm (15) support (12) protrudes laterally out of the upright frame tube (23) and a protective cover (30) screens off a channel opening (24) towards the top and defined by the bracket-shaped brush unit (27) and said frame tube (23).

11. Device as claimed in claims 7—10, characterized in that the free end of the bracket-like brush unit (14) is provided with a protective sole (19).

12. Device as claimed in any of the foregoing claims, characterized in that the brushing device (14) displays at least partially a curvature adapted to the shape of the back of an animal to be brushed.

13. Device as claimed in claim 12 and claim 2 or 3, characterized in that the brush roll (60, 61) displays a mildly double-conical form.

14. Device as claimed in claim 12 and claim 2 or 3, characterized in that the brush roll comprises in lengthwise direction at least two segments (64, 65) placed at an angle to each other.

15. Device as claimed in claim 14, characterized in that said angle can be adjusted.

## Patentansprüche

1. Vorrichtung (1) zum Bürsten der Rücken von Tieren, wobei die Vorrichtung aufweist:

einen Ständer (4, 7) anbringbar in einer feststehenden Position (6), an welchen Ständer (4, 7) eine Bürsteneinheit (14) auf- und abbewegbar angeschlossen ist, wobei der Ständer (4, 7) ein wesentlichen vertikales Ständerrohr (7) und einen einzigen Drahtarm (15) aufweist, der die Bürsteneinheit (14) trägt und von dem Ständer (4, 7) derart geführt wird, daß die Auf- und Abbewegung ermöglicht ist, und

eine Federanordnung (17), die dem Zusammenwirken mit der Gewichtskraft des Tragarmes (15) und der Bürsteneinheit (14) dem Drahtarm (15) in eine Ruheposition relativ zu dem Ständer (4, 7) drückt,

dadurch gekennzeichnet, daß die Federanordnung (17) in dem Ständerrohr (7) aufgenommen ist.

2. Vorrichtung nach Anspruch 1, dadurch gekennzeichnet, daß die Bürsteneinheit eine Bürstenrolle (46) aufweist, die um eine an den Drahtarm (45) angeschlossene liegende Stange (47) drehbar ist.

3. Vorrichtung nach Anspruch 1 oder 2, dadurch gekennzeichnet, daß eine Bürstenrolle (58), die um eine aufrechte Achse (57) drehbar ist, an dem Ständer (55, 56) angebracht ist.

4. Vorrichtung nach den Ansprüchen 2 bis 3, gekennzeichnet durch eine auf die Bürstenrolle (46) einwirkende Reibkupplung (50—54).

5. Vorrichtung nach Ansprüchen 2 bis 4, dadurch gekennzeichnet, daß die Stange (47) an einer zweiten Feder (48) befestigt ist, die an den Tragarm angebracht ist.

EP 0 287 176 B1

6. Vorrichtung nach Anspruch 5, dadurch gekennzeichnet, daß die Feder (48) eine Schraubenfeder ist, die in einer Schutzhülse (59) aufgenommen ist.

7. Vorrichtung nach Anspruch 1, dadurch gekennzeichnet, daß die Bürsteneinheit im wesentlichen bügelförmig ausgebildet ist und die Vorrichtung (1) Verriegelungsmittel (10, 11) aufweist, welche den Tragarm (15) gegen eine Drehung relativ zu der festliegenden Position (6) sichern.

8. Vorrichtung nach Anspruch 7, dadurch gekennzeichnet, daß die Verriegelungsmittel (10, 11) einen Tragarm (15)-stütze (12) aufweisen, die an dem Tragarm (15) angeschlossen ist und die für eine auf- und abgehende Hin- und Herbewegung in einem aufrechten Ständerrohr (7) mit einem unrunden, beispielsweise rechteckigen, Lagermittel (10, 11) angebracht ist.

9. Vorrichtung nach Anspruch 8, dadurch gekennzeichnet, daß ein ringförmiger Lagerdeckkel (9) auf dem freien Ende des Ständerrohres (7) plaziert ist, in welchem Deckel (9) ein Ring (10) aus Lagerelementen (11) aufgenommen ist, die als Lager für die Tragarm(15)-Stütze (12) dienen, die durch den Lagerdeckel (9) eingesetzt ist.

10. Vorrichtung nach Anspruch 7 oder 8, dadurch gekennzeichnet die Tragarm (15)-Stütze (12) seitlich aus dem aufrechten Ständerrohr (23) vorsteht und ein Schutzdeckel (30) ein Kanalöffnung (24) nach oben hin abschirmt und von der bügelförmigen Bürsteneinheit (27) und dem Ständerrohr (23) gebildet wird.

11. Vorrichtung nach Ansprüchen 7 bis 10, dadurch gekennzeichnet, daß das freie Ende der bügelförmigen Bürsteneinheit (14) mit einer Schutzsohle versehen ist.

12. Vorrichtung nach einem der vorangehenden Ansprüche dadurch gekennzeichnet, daß die Bürstenvorrichtung wenigstens teilweise eine an die Form des Rückens eines zu bürstenden Tieres angepaßte Krümmung aufweist.

13. Vorrichtung nach Anspruch 12 und Anspruch 2 oder 3, dadurch gekennzeichnet, daß die Bürstenrolle (60, 61) eine schwach doppelchronische Gestalt aufweist.

14. Vorrichtung nach Anspruch 12 und Anspruch 2 oder 3, dadurch gekennzeichnet, daß die Bürstenrolle in Längsrichtung wenigstens 2 Segmente (64, 65) aufweist, die in einem Winkel gegeneinander angestellt sind.

15. Vorrichtung nach Anspruch 14, dadurch gekennzeichnet, daß der Winkel einstellbar ist.

**Revendications**

1. Appareil (1) de brossage du dos d'animaux, le dispositif comprenant:

un châssis (4, 7) destiné à être placé en position fixe (6), un ensemble à brosse (14) étant raccordé au châssis (4, 7) afin qu'il puisse se déplacer verticalement, le châssis (4, 7) comprenant un tube sensiblement vertical (7) et un bras unique (15) de support de l'ensemble à brosse (14), le bras (15) étant guidé par le châssis (4, 7) afin qu'il puisse se déplacer verticalement, et

un dispositif à ressort (17) qui, en combinaison avec la force due au poids du bras de support (15) et de l'ensemble à brosse (14), rappelle le bras de support (15) vers une position de repos par rapport au châssis (4, 7), caractérisé en ce que: le dispositif à ressort (17) est logé à l'intérieur du tube du châssis (7).

2. Appareil selon la revendication 1, caractérisé en ce que l'ensemble à brosse comprend un rouleau de brossage (46) destiné à tourner autour d'une tige sensiblement horizontale (47) raccordée au bras de support (45).

3. Appareil selon la revendication 1 ou 2, caractérisé en ce qu'un rouleau de brossage (58) qui peut tourner autour d'un arbre vertical (57) est fixé au châssis (55, 56).

4. Appareil selon les revendications 2 et 3, caractérisé par un accouplement à friction (50—54) agissant sur le rouleau de brossage (46).

5. Appareil selon les revendications 2 à 4, caractérisé en ce que la tige (47) est fixée à un second ressort (48) fixé au bras de support.

6. Appareil selon la revendication 5, caractérisé en ce que le ressort (48) est un ressort spiralé logé dans un manchon protecteur (59).

7. Appareil selon la revendication 1, caractérisé en ce que l'ensemble à brosse (14) a pratiquement une forme de potence, et l'appareil (1) comprend un dispositif de blocage (10—11) qui maintient le bras de support (15) afin qu'il ne puisse pas tourner par rapport à la position fixe (6).

8. Appareil selon la revendication 7, caractérisé en ce que le dispositif de blocage (10, 11) comprend un support (12) du bras (15) de support qui est raccordé au bras de support (15), le support (12) étant monté afin qu'il puisse se déplacer en translation verticale dans un tube vertical (7) de châssis avec interposition d'un palier (10, 11) de forme non circulaire, par exemple carrée.

9. Appareil selon la revendication 8, caractérisé en ce qu'un couvercle annulaire (9) de palier est monté à l'extrémité libre du tube (7) du châssis, et une bague (10) d'élément (11) de palier est logée dans le couvercle (9) et constitue un palier pour le support (12) du bras de support (15) qui est introduit dans le couvercle (9) de palier.

10. Appareil selon la revendication 7 ou 8, caractérisé en ce que le support (12) du bras de support (15) dépasse latéralement du tube vertical (23) du châssis et un couvercle protecteur (30) protège une ouverture (24) d'un canal vers la partie supérieure, cette ouverture étant délimitée par l'ensemble (27) à brosse en forme d'équerre et le tube (23) du châssis.

11. Appareil selon les revendications 7 à 10, caractérisé en ce que l'extrémité libre de l'ensemble à brosse (14) en forme d'équerre a une semelle protectrice (19).

12. Appareil selon l'une quelconque des

5

revendications précédentes, caractérisé en ce que le dispositif de brossage (14) a une courbure au moins partielle correspondant à la configuration du dos d'un animal à brosser.

13. Appareil selon la revendication 12 et la revendication 2 ou 3, caractérisé en ce que le rouleau de brossage (60, 61) a une légère forme de cône double.

14. Appareil selon la revendication 12 et la revendication 2 ou 3, caractérisé en ce que le rouleau de brossage comprend, en direction longitudinale, au moins deux segments (64, 65) faisant un certain angle l'un avec l'autre.

15. Appareil selon la revendication 14, caractérisé en ce que cet angle peut être réglé.

FIG.1

EP 0 287 176 B1

FIG.2

FIG. 3

3

FIG.4

FIG. 5

FIG. 6